# EUROPEAN PATENT APPLICATION

(11) **EP 4 769 005 A1**
(43) Date of publication of application: **01.07.2026**
(21) Application number: 25222805.1
(22) Date of filing: 12.12.2025
(51) Int. Cl.: G02B 27/00, F21V 8/00, G02B 27/01

(54) **OPTICAL APPARATUS**

(30) Priority: 20.12.2024 GB 202418820
(71) Applicant: Nokia Technologies Oy, 02610 Espoo (FI)
(72) Inventor: JÄRVENPÄÄ, Toni Johan, Akaa (FI); SALMIMAA, Marja Pauliina, Tampere (FI)
(74) Representative: Nokia EPO representatives

(57) **Abstract**

Examples of the disclosure relate to optical apparatus for adjusting the size or position of an exit pupil. Example apparatus comprise a light guide configured to receive an input beam of light and provide a first expanded output beam of light and a second expanded output beam of light. The first expanded beam of light is directed in a first direction and the second expanded beam of light is directed in a second direction. The apparatus also comprises at least one optical component, spaced from the light guide, and configured to reflect at least part of the second expanded output beam of light towards the first direction to provide a combined exit pupil. The combined exit pupil comprises the first expanded beam of light and the second expanded beam of light wherein the combined exit pupil comprises a non-overlapping region.

## Description

### TECHNOLOGICAL FIELD

Examples of the disclosure relate to optical apparatus. Some relate to optical apparatus for adjusting the size or position of an exit pupil.

### BACKGROUND

Optical apparatus, such as exit pupil expanders, can be used in display systems and devices such as near eye displays, augmented and/or virtual reality headsets and head up displays for example. It is useful to be able to provide exit pupils of different sizes and/or positions.

### BRIEF SUMMARY

According to various, but not necessarily all, examples of the disclosure there is provided an apparatus comprising:
a light guide configured to receive an input beam of light and provide a first expanded output beam of light and a second expanded output beam of light wherein the first expanded beam of light is directed in a first direction and the second expanded beam of light is directed in a second direction; and
at least one optical component, spaced from the light guide, and configured to reflect at least part of the second expanded output beam of light towards the first direction to provide a combined exit pupil comprising the first expanded beam of light and the second expanded beam of light wherein the combined exit pupil comprises a non-overlapping region.

The at least one optical component may be adjustable to enable a spacing between the light guide and the at least one optical component to be adjusted and thereby adjust the size of the combined exit pupil.

The at least one optical component that may be adjustable may comprise one or more optical components that are moveable relative to the light guide.

The apparatus may comprise a first optical component and a second optical component and the first optical component is positioned between the light guide and the second optical component.

At least the first optical component may be switchable.

The second expanded output beam of light may comprise a first wavelength band and a second wavelength band and the at least one optical component may be configured to reflect light in the first wavelength band.

The second expanded output beam of light may comprise a first polarization state and a second polarization state and the at least one optical component may be configured to reflect light in the first polarization state.

The at least one optical component may be positioned so that the combined exit pupil comprises a non-overlapping region in a first dimension and a second dimension.

The at least one optical component may be parallel with the light guide.

The at least one optical component may comprise at least one of:
one or more mirrors;
one or more lenses;
one or more dichroic beam splitters; or
one or more polarizing beam splitters.

The first expanded output beam of light and the reflected second expanded output beam of light may be arranged to be directed towards a windshield and reflected from the windshield towards a user.

The apparatus may comprise one or more optical components configured to compensate for the curvature of the windscreen.

The light guide may comprise in-coupling diffractive means configured to in-couple one or more input beams of light into the light guide, expanding diffractive means configured to expand the one or more input beams of light, and out-coupling diffractive means configured to out-couple the one or more beams of light from the light guide to provide the first expanded output beam of light and the second expanded output beam of light.

According to various, but not necessarily all, examples of the disclosure there is provided a device comprising an apparatus as claimed in any preceding claim wherein the device comprises at least one of:
a terrestrial vehicle;
an aquatic vehicle; or
an aerial vehicle.

According to various, but not necessarily all, embodiments there is provided an apparatus comprising:
at least one processor; and
at least one memory including computer program code;
the at least one memory storing instructions that, when executed by the at least one processor, cause the apparatus to perform at least a part of one or more methods described herein.

According to various, but not necessarily all, embodiments there is provided an apparatus comprising means for performing at least part of one or more methods described herein. The description of a function and/or action should additionally be considered to also disclose any means suitable for performing that function and/or action. Functions and/or actions described herein can be performed in any suitable way using any suitable method.

According to various, but not necessarily all, embodiments there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all the features described in respect of other examples of the disclosure, and vice versa. Also, it is to be appreciated that any one or more or all the features, in any combination, may be implemented by/comprised in/performable by an apparatus, a method, and/or computer program instructions as desired, and as appropriate. The description of a function should additionally be considered to also disclose any means suitable for performing that function

### BRIEF DESCRIPTION

Some examples will now be described with reference to the accompanying drawings in which:
FIG. 1 shows an example apparatus;
FIG. 2 shows a head up display;
FIG. 3 shows a head up display;
FIGS. 4A to 4C show a head up display;
FIG. 5 shows a head up display;
FIGS. 6A to 6B show a head up display; and
FIG. 7 shows a head up display.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Corresponding reference numerals are used in the figures to designate corresponding features. For clarity, all reference numerals are not necessarily displayed in all figures.

### DETAILED DESCRIPTION

Optical apparatus, such as exit pupil expanders, can be used in display systems and devices such as near eye displays, augmented and/or virtual reality headsets and head up displays for example. Examples of the disclosure provide an apparatus which can be arranged to provide exit pupils of different sizes and/or different positions.

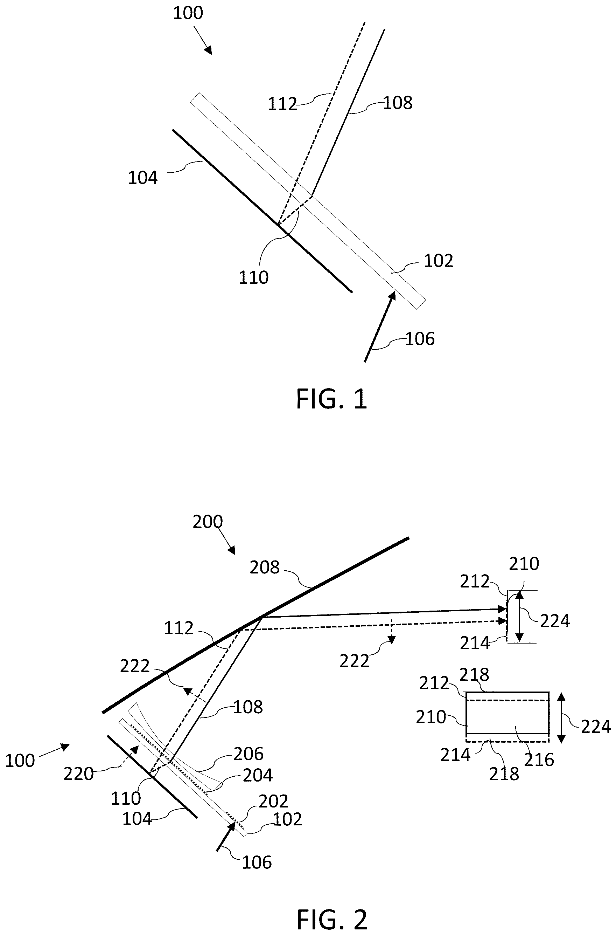

Fig. 1 shows an example apparatus 100. The apparatus 100 comprises a light guide 102 and at least one optical component 104. The apparatus 100 can comprise additional components that are not shown in Fig. 1. The apparatus 100 could be provided in any suitable device such as a head up display (HUD), an augmented reality display, a virtual reality display, or any other suitable device.

The light guide 102 is configured to receive an input beam of light 106 and provide a first expanded output beam of light 108 and a second expanded output beam of light 110. The first expanded beam of light 108 is directed in a first direction and the second expanded beam of light 110 is directed in a second direction.

The input beam of light 106 can be provided from an image generating unit, a light source or any other suitable means.

The first direction and the second direction can extend, at least partially, in opposing directions. For instance, the first expanded beam of light 108 can be provided on a first side of the light guide 102 and the second expanded beam of light 110 can be provided on a second, opposing side of the light guide 102.

In some examples the light guide 102 can comprise in-coupling diffractive means configured to in-couple one or more input beams of light 106 into the light guide 102, expanding diffractive means configured to expand the one or more input beams of light in the first dimension, and out-coupling diffractive means configured to expand in the second dimension and out-couple the one or more beams of light from the light guide 102 to provide the expanded output beams of light 108, 110.

The respective diffractive means of the light guide 102 can comprise any means that can be configured to diffract the input beams of light. The diffractive means can comprise any one or more of a diffractive optical element, diffractive structure, diffraction gratings, holographic gratings, Bragg gratings, rulings, ridges, surface relief diffractive gratings or any suitable optical component or feature having a periodic structure that splits and diffracts light into several beams travelling in different directions.

The at least one optical component 104 can comprise any suitable components. In some examples the at least one optical component 104 can comprise one or more mirrors, one or more lenses, one or more dichroic beam splitters, or one or more polarizing beam splitters, or any other suitable optical components.

The at least one optical component 104 is provided spaced from the light guide 102. The at least one optical component 104 is configured to reflect at least part of the second expanded output beam of light 110 towards the first direction. The first expanded beam of light 108 and the reflected second expanded output beam of light 112 provide a combined exit pupil. The combined exit pupil comprises a non-overlapping region.

The size of the non-overlapping region in the combined exit pupil is determined by the size of the spacing between the light guide 102 and the optical component 104. If the optical component 104 is positioned close to the light guide 102 there is a small spacing. This results in a larger overlapping region of the combined exit pupil. Conversely, if the optical component 104 is positioned further away from the light guide 102 there is a larger spacing. This larger spacing results in a smaller overlapping region of the combined exit pupil. This larger spacing can provide a combined exit pupil with an increased size compared to the smaller spacing.

The non-overlapping region can comprise a region in a first-direction and a second direction. For example, the non-overlapping region can comprise a vertical section and a horizontal section. This can enable the size and/or position of the exit pupil to be adjusted in more than one direction.

The at least one optical component 104 can be provided in any suitable position or orientation relative to the light guide 102. If the light guide 102 and the optical component 104 are flat, or substantially flat, then the light guide 102 and the optical component 104 can be parallel to each other. In some examples the light guide 102 and/or the optical components 104 could be curved. In such examples there may be an axis of the curved items that is parallel with at least part of the surfaces of the other items.

In some examples the at least one optical component 104 can be adjustable. For instance, the one or more optical components 104 could comprise at least one optical component 104 that is moveable relative to the light guide 102. This can enable the spacing between the optical component 104 and the light guide 102 to be adjusted.

In other examples the apparatus 100 could comprise a first optical component and a second optical component and the first optical component is positioned between the light guide and the second optical component. At least the first optical component can be switchable. The first optical component can be switched between an off state and an on state so that when the first optical component is in an on state the second expanded output beam of light 110 is reflected from the first optical component and when the first optical component is in an off state the second expanded output beam of light 110 is reflected from the second optical component. In some examples the apparatus 100 could comprise more than two optical components where at least some of the optical components are switchable. This can change the spacing between the light guide 102 and an active optical component.

Adjusting the spacing between the optical component 104 and the light guide 102 adjusts the non-overlapping region of the combined exit pupil. This can adjust the size of the combined exit pupil that is provided by the apparatus 100.

Any suitable means can be used to adjust the spacing between the optical component 104 and the light guide 102. The means could be manual or automatic.

In some examples the second expanded beam of light 110 can comprise multiple wavelength bands and the at least one optical component 104 can be configured to reflect light in a subset of the wavelength bands. For example, the second expanded beam of light 110 can comprise a first wavelength band and a second wavelength band and the at least one optical component 104 configured to reflect light in the first wavelength band. The at least one optical component 104 can be configured not to reflect light in the second wavelength band. Such arrangements could be used to compensate for sparser wavelengths and provide a combined exit pupil with more uniform colour. For instance, blue wavelengths of light might be sparser in the respective expanded output beams 108, 110. If the at least one optical component 104 selectively reflects blue light this can increase the density or intensity of the blue light in the combined exit pupil. In such examples the at least one optical component 104 could comprise a dichroic mirror or any other suitable means.

In some examples the second expanded beam of light 110 can comprise a first polarization state and a second polarization state and the at least one optical component 104 can be configured to reflect light in the first polarization state. The at least one optical component 104 can be configured not to reflect light in the second polarization state.

In some examples the apparatus 100 can be used in a HUD. In such examples the apparatus 100 can be arranged so that the first expanded output beam of light 108 and the reflected second expanded output beam of light 112 are directed towards a windshield and reflected from the windshield towards a user. In such examples the apparatus 100 could comprise one or more optical components configured to compensate for the curvature of the windscreen. These optical components can be provided in addition to the optical components 104 that reflect the second expanded beam of light 112. In other examples the first expanded output beam of light 108 and the reflected second expanded output beam of light 112 can be directed towards a planar combiner and reflected from the combiner towards a user, or directed directly without a planar combiner towards a user. In such examples of apparatus 100, there would be no need for additional optical components to compensate for the curvature of the windscreen.

Fig. 2 shows an example HUD 200 that comprises an apparatus 100 according to examples of the disclosure. The HUD 200 can be used within a terrestrial vehicle, an aquatic vehicle, an aerial vehicle, or any other suitable type of vehicle.

The HUD 200 can comprise an image generating unit or any other suitable means that is configured to provide an input beam of light 106 to the apparatus 100. The light guide 102 of the apparatus 100 comprises an in-coupling diffractive means 202 that is configured to in-couple the input beam of light 106 to the light guide 102. The in-coupled beam of light propagates through the light guide 102 via total internal reflection. The light guide 102 also comprises an out-coupling diffractive means 204.

The out-coupling diffractive means 204 are configured to out-couple the one or more beams of light from the light guide 102 to provide the first expanded output beams of light 108 and the second expanded output beams of light 110.

The first expanded output beams of light 108 and the second expanded output beams of light 110 are output in different directions from the light guide 102. In the example of Fig. 2 the first expanded beam of light 108 is directed towards a windshield 208 of the vehicle. The second expanded beam of light 110 is directed away from the windshield 208. The second expanded beam of light 110 is directed towards an optical component 104. In this example the optical component 104 comprises a mirror. Other types of optical component 104 could be used in other examples.

The optical component 104 is spaced from the light guide 102. A gap is provided between the optical component 104 and the light guide 102.

The optical component 104 is configured to reflect the second expanded beam of light 110. The reflected second expanded beam of light 112 is directed towards the windshield 208. The reflected second expanded beam of light 112 can be parallel to, or substantially parallel to the first expanded beam of light 108.

The first expanded beam of light 108 and the reflected second expanded beam of light 112 are reflected from the windshield 208 towards a user of the HUD 200.

In the example of Fig. 2 the HUD 200 comprises an additional optical component 206. The additional optical component 206 can be configured to focus the first expanded beam of light 108 and the reflected second expanded beam of light 112 and/or to correct for curvature of the windshield 208. In the example of Fig. 2 the additional optical component 206 comprises a lens positioned between the light guide 102 and the windshield 208. Other types or arrangements of optical components 206 could be used in other examples.

The first expanded beam of light 108 and the reflected second expanded beam of light 112 provide a combined exit pupil 210. The combined exit pupil is formed from a first exit pupil 212 and a second exit pupil 214. The first exit pupil 212 is provided by the first expanded beam of light 108 and the second exit pupil 214 is provided by the reflected second expanded beam of light 112.

The combined exit pupil 210 comprises an overlapping region 216. In the overlapping region 216 the first exit pupil 212 and the second exit pupil 214 overlap. The term exit pupil here refers to an area or volume in space inside where the full virtual image or field-of-view of the HUD 200 is visible without image cropping or vignetting. The overlapping region 216 corresponds to regions where the first expanded beams of light 108 for the full field-of-view and the reflected second expanded beams of light 112 for the full field-of-view overlap. In some examples, the combined exit pupil 210 could be in a different distance from the HUD 200 compared to the first exit pupil 212 and to the second exit pupil 214.

The combined exit pupil 210 also comprises one or more non-overlapping regions 218. In the non-overlapping region 218 the first exit pupil 212 and the second exit pupil 214 do not overlap. The non-overlapping regions 218 correspond to regions where the first expanded beam of light 108 and the reflected second expanded beam of light 112 are displaced relative to each other and do not overlap. The displacement of the first expanded beam of light 108 and the reflected second expanded beam of light 112 is provided by the spacing between the light guide 102 and the optical component.

In the example of Fig. 2 the non-overlapping regions 218 are provided above and below the overlapping region 216. This increases the height of the combined exit pupil 210 compared to the height of either the first exit pupil 212 or the second exit pupil 214.

In some examples the light guide 102 and/or the optical component 104 can be adjustable so as to adjust the spacing between the light guide 102 and the optical component 104. In this case the optical component 104 could be moved towards the light guide 102 as indicated by the arrow 220. This decreases the spacing between the first expanded beam of light 108 and the reflected second expanded beam of light 112 as indicated by the arrows 222. This would increase the overlap of the first exit pupil 212 and the second exit pupil 214 and decrease the height of the combined exit pupil 210.

Conversely if the optical component 104 was moved further away from the light guide 102 this would increase the spacing between the first expanded beam of light 108 and the reflected second expanded beam of light 112. This would decrease the overlap of the first exit pupil 212 and the second exit pupil 214 and increase the height of the combined exit pupil 210. The arrows 224 indicate the height of the combined exit pupil 210.

In the example of Fig. 2 relative movement of the optical component 104 and the light guide 102 can be used to adjust the size and/or position of the combined exit pupil 210. The movement could be made as a manual adjustment or could be made automatically to align with a user's eye level or any other suitable reference.

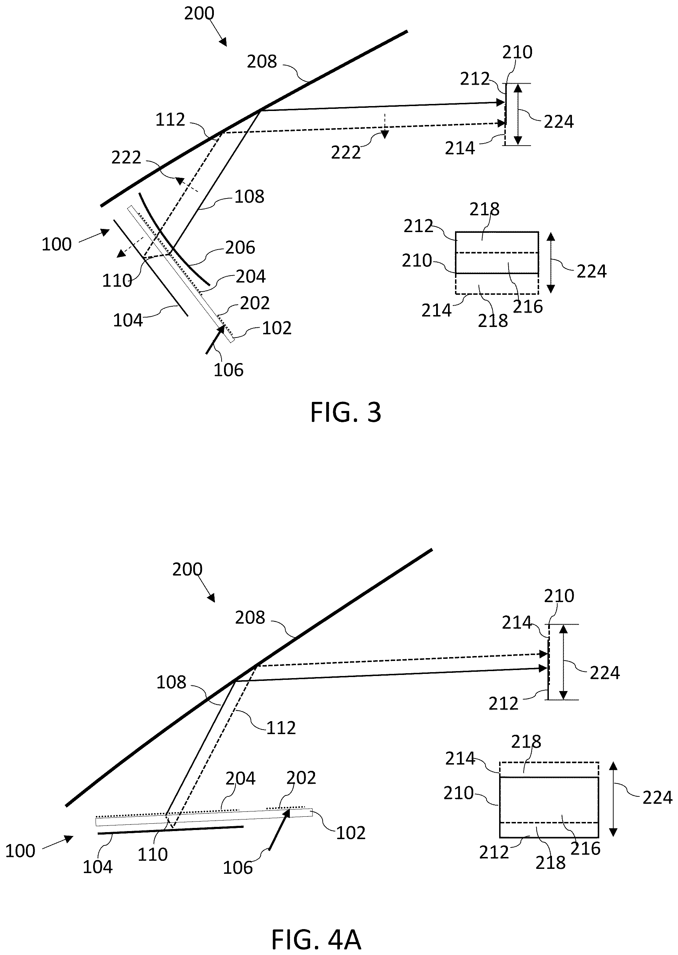

Fig. 3 shows another example HUD 200 that comprises an apparatus 100 according to examples of the disclosure. The HUD 200 comprises an apparatus 100 that provides a combined exit pupil 210 similar to that shown in Fig. 2.

The example of Fig. 3 shows the effect that the out-coupling tilt angle of the expanded beams of light 108, 110 has on the size of the combined exit pupil 210.

In the example of Fig. 2 the out-coupling tilt angle of the expanded beams of light 108, 110 was around 10°. Fig. 3 shows a similar arrangement in which the out-coupling tilt angle of the expanded beams of light 108, 110 is around 20°. Other factors that affect the size of the combined exit pupil 210, such as the spacing between the light guide 102 and the optical component 104 are kept the same.

In this case the increase in the tilt angle increases the offset between the first expanded beam of light 108 and the reflected second expanded beam of light 112. This decreases the overlap of the first exit pupil 212 and the second exit pupil 214 and increases the height of the combined exit pupil 210 compared to the example shown in Fig. 2.

The optimum tilt angle of the expanded beams of light 108, 110 is determined by the design of the diffractive means 202, 204, and the expanding diffractive means (not illustrated) of the light guide 102. The optimum tilt angle of the expanded beams of light 108, 110 is not adjustable however the diffractive means 202, 204 and expanding diffractive means can be designed so as to provide suitable tilt angles.

Figs. 4A to 4C show another example HUD 200 that comprises an apparatus 100 according to examples of the disclosure. The HUD 200 comprises an apparatus 100 that provides a combined exit pupil 210 similar to that shown in Figs. 2 and 3. The light guide 102 and optical component 104 are provided in a different orientation in Figs. 4A to 4C compared to that shown in Figs. 2 and 3.

In the examples of Figs. 4A to 4C a tilt angle of up to 35° can be used. Increasing the size of the tilt angle can provide for a larger offset between the first expanded beam of light 108 and the reflected second expanded beam of light 112. If a larger tilt angle is used then a larger offset can be obtained with a smaller spacing between the light guide 102 and the optical component 104.

In the example of Fig. 4A the out-coupling tilt angle of the expanded beams of light 108, 110 is around 35°. There is a small spacing between the light guide 102 and the optical component 104. This provides a combined exit pupil 210 with a similar height to that shown in Fig. 3 where there was a smaller tilt angle but a larger spacing between the light guide 102 and the optical component 104. (Note the Figs are not to accurate scales and therefore the size of the combined exit pupil 210s in the Figs are for illustrative purposes and not an accurate representation of the sizes).

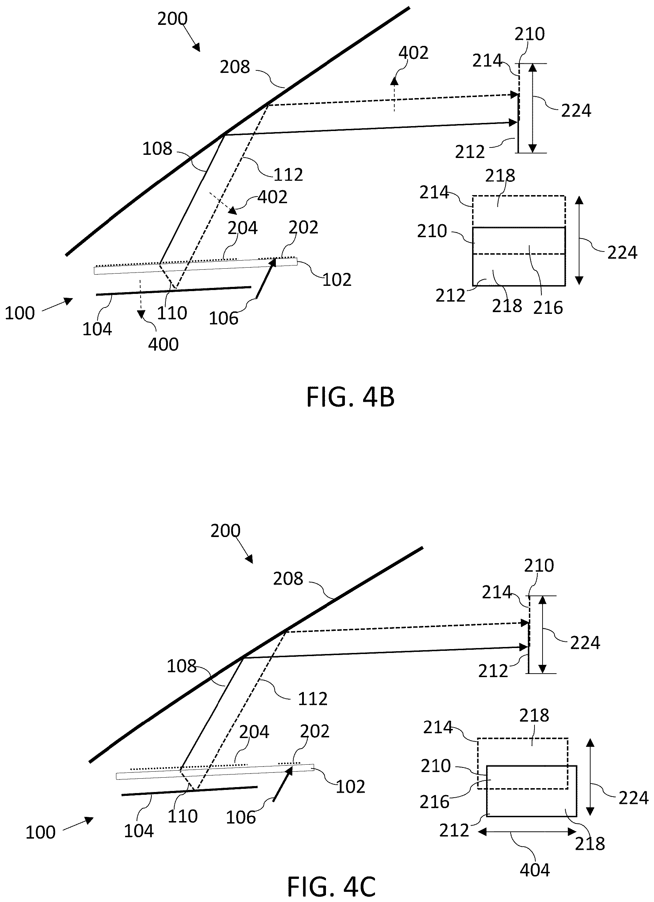

In the example of Fig. 4B the optical component 104 is moved relative to the light guide 102 as indicated by the arrow 400. This increases the spacing between the light guide 102 and the optical component 104. This increases the spacing between the first expanded beam of light 108 and the reflected second expanded beam of light 112 as indicated by the arrows 402. This would decrease the overlap of the first exit pupil 212 and the second exit pupil 214 and increase the height of the combined exit pupil 210.

In the example shown in Fig. 4B there is only a small overlapping region 216 in the combined exit pupil 210. In some cases the spacing between the light guide 102 and the optical component 104 and the out-coupling tilt angle of the expanded beams of light 108, 110 could be arranged so that there is no overlapping region 216 in the combined exit pupil 210. In such cases the first exit pupil 212 could be provided adjacent to the second exit pupil 214. This can provide a combined exit pupil 210 that is twice the size of either the first exit pupil 212 or the second exit pupil 214.

Fig. 4C shows an example in which the outcoupling of the expanded beams of light 108, 110 can be tilted around two axes. This can create a spacing between the first expanded beam of light 108 and the reflected second expanded beam of light 112 in two different axes. In the example of Fig. 4C this displaces the second exit pupil 214 in both a vertical and also a horizontal direction relative to the first exit pupil 212. The non-overlapping region 218 of the combined exit pupil 210 has a portion in the horizontal direction and also in the vertical direction.

The arrow 404 indicates the width of the combined exit pupil 210. This is increased compared to the examples shown in Figs. 4A and 4C.

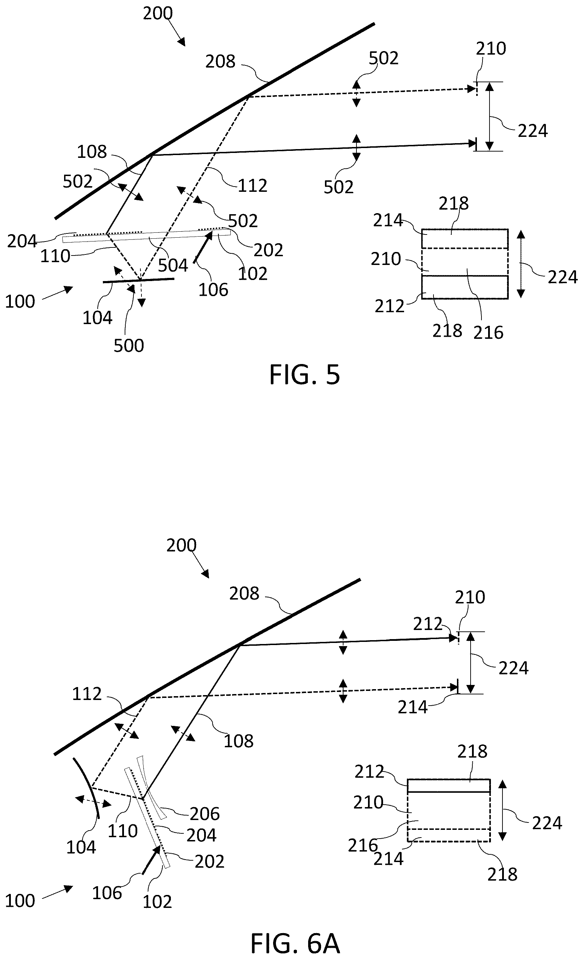

Fig. 5 shows another example HUD 200 that comprises an apparatus 100 according to examples of the disclosure. In the example of Fig. 5 the light guide 102 and optical component 104 are provided in a similar orientation to that shown in Figs. 4A to 4C.

In this example the optical component 104 can be moved relative to the light guide 102 as indicated by the arrow 500. This can enable the spacing between the light guide 102 and the optical component 104 to be adjusted. Adjusting the spacing between the light guide 102 and the optical component 104 changes the offset between the first expanded beam of light 108 and the reflected second expanded beam of light 112 as indicated by the arrows 502.

In the example of Fig. 5 the out-coupling diffractive means 204 is smaller than the out-coupling diffractive means 204 used in the examples shown in Figs. 2 to 4C. This means that the first exit pupil 212 and the second exit pupil 214 are also smaller.

However, in the example of Fig. 5, the spacing between the light guide 102 and the optical component 104 is large and also the out-coupling tilt angle of the expanded beams of light 108, 110 is large. This means that the combined exit pupil 210 only has a small overlapping region 216. In some examples the spacing between the light guide 102 and the optical component 104 is large and the out-coupling tilt angle of the expanded beams of light 108, 110 could be such that there is no overlapping region 216 in the combined exit pupil.

Having a small overlapping region 216 or no overlapping region 216 can provide a combined exit pupil with sufficient size even with a smaller out-coupling diffractive means 204. Having a smaller out-coupling diffractive means 204 can make the apparatus 100 easier and/or cheaper to manufacture.

In some examples a transparent portion 504 can be provided on the light guide 102 between the in-coupling diffractive means 202 and the out-coupling diffractive means 204. The transparent portion 504 can enable the reflected second expanded beam of light112 to pass through.

Figs. 6A to 6B show another example HUD 200 that comprises an apparatus 100 according to examples of the disclosure. The HUD 200 comprises an apparatus 100 that provides a combined exit pupil 210 similar to that shown in Figs. 2 and 3. The light guide 102 and optical component 104 are provided in an orientation similar to that shown in Figs. 2 and 3.

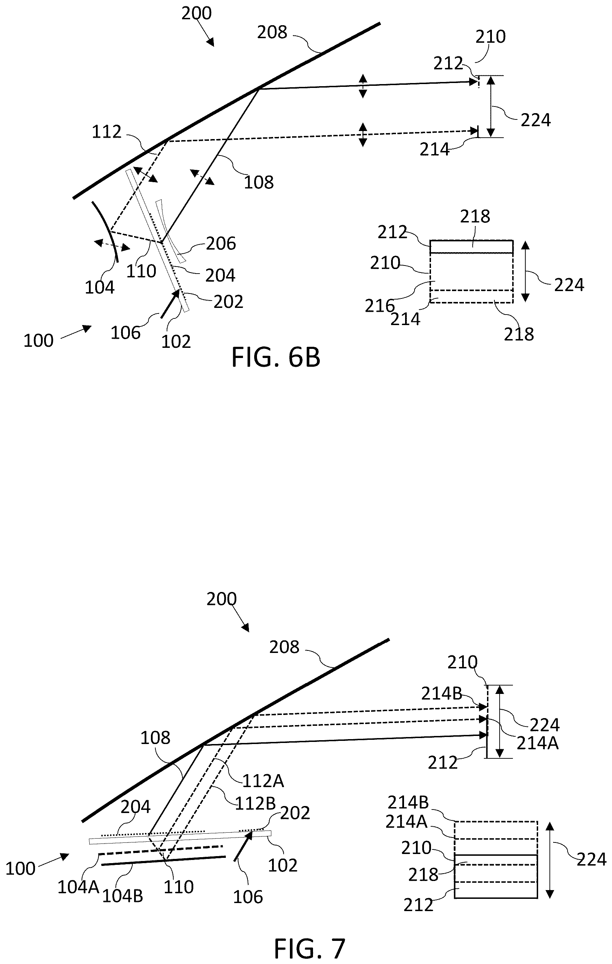

In the example of Figs. 6A and 6B the out-coupling tilt angle of the expanded beams of light 108, 110 is large. In this case the out-coupling tilt angle of the expanded beams of light 108, 110 is around 35°. Other out-coupling tilt angles could be used in other examples.

In the example of Figs. 6A and 6B the apparatus 100 is arranged to compensate for curvature of the windshield 208. The compensation for curvature of the windshield 208 can be achieved by different components for the first expanded beam of light 108 and the reflected second expanded beam of light 112. For instance, one or more first optical components can be arranged to compensate the first expanded beam of light 108 for the curvature of the windshield 208 and one or more second optical components can be arranged to compensate the reflected second expanded beam of light 112 for the curvature of the windshield 208. In some examples, the compensation does not require additional optical components, as the outcoupled beams of light from the light guide 102 can be pre-adjusted to compensate for the curvature of the windshield 208.

In the examples of Figs. 6A and 6B an additional optical component 206 is configured to compensate the first expanded beam of light 108 for the curvature of the windshield 208. The additional optical component 206 in this example comprises a lens positioned between the light guide 102 and the windshield. Also in the examples of Figs. 6A and 6B the optical component 104 is curved to compensate the reflected second expanded beam of light 112 for the curvature of the windshield 208. Other means for providing compensation for the curvature of the windshield 208 could be used in other examples.

In the examples of Figs. 6A and 6B the large spacing between the light guide 102 and the optical component 104 combined with the large out-coupling tilt angle result in a small overlapping region 216 in the combined exit pupil 210. In some cases there might be no overlapping region 216 in the combined exit pupil 210.

In the examples of Figs. 6A and 6B a smaller out-coupling diffractive means 204 can be used. This would result in a smaller first exit pupil 212 and a smaller second exit pupil 214. However, as there is only a small overlapping region 216 a larger combined exit pupil 210 can still be obtained.

In the example of Fig. 6A the light guide 102 only overlays part of the optical component 104. The reflected second expanded beam of light 112, or at least part of the reflected second expanded beam of light 112, does not pass through the light guide 102. This can enable a smaller light guide 102 to be used but could result in the edge of the light guide 102 being visible in the image provided by the combined exit pupil 210.

In the example of Fig. 6B the light guide 102 overlays all of the optical component 104. A transparent portion 600 is provided on the light guide 102 in the path of the reflected second expanded beam of light 112. This can avoid the edge of the light guide being visible in or over the image provided by the combined exit pupil 210.

In the examples of Figs. 6A and 6B an increase in the height of the combined exit pupil 210 is shown. In other examples the first expanded beam of light 108 and the reflected second expanded beam of light 112 could be shifted relative to each other in the horizontal direction.

Fig. 7 shows another example HUD 200 that comprises an apparatus 100 according to examples of the disclosure. In the example of Fig. 7 the light guide 102 and optical component 104 are provided in a similar orientation to that shown in Figs. 4A to 4C.

In the example of Fig. 7 the apparatus 100 comprises multiple optical components 104 arranged in stacked configurations.

In this case the apparatus 100 comprise a first optical component 104A and a second optical component 104B. The first optical component 104A is positioned between the light guide 102 and the second optical component 104B. The spacing between the first optical component 104A and the light guide 102 is smaller than the spacing between the light guide 102 and the second optical component 104B.

The first optical component 104A can be switchable so that it can be configured in an on state or an off state. The switchable optical component could comprise an electro-optically switchable transreflective mirror or any other suitable means. The electro-optically switchable transreflective mirror can be based in solid-state thin film device made from a special liquid crystal material. The switchable optical component can be rapidly switched between an on state and an off state.

When the first optical component 104A is in an on state the second expanded output beam of light 110 is reflected from the first optical component 104A. This provides the reflected second expanded beam of light 112A. The reflected second expanded beam of light 112A has a first offset from the first expanded beam of light 108. The reflected second expanded beam 112A provides a second exit pupil 214A that overlaps with the first exit pupil 212.

When the first optical component 104A is in an off state the second expanded output beam of light 110 is not reflected from the first optical component 104A. When the first optical component is in an off state the second expanded output beam of light 110 passes through the first optical component 104A and is reflected from the second optical component 104B. This provides the reflected second expanded beam of light 112B. The reflected second expanded beam of light 112B has a second offset from the first expanded beam of light 108. The second offset is larger than the first offset because the spacing between the second optical component 104B and the light guide 102 is larger than the spacing between the first optical component 104A and the light guide 102.

The reflected second expanded beam of light 112B provides a different second exit pupil 214B that overlaps with the first exit pupil 212. As the spacing between the second optical component 104B and the light guide 102 is larger than the spacing between the first optical component 104A and the light guide 102 there is a smaller overlapping region 216 between the second exit pupil 214B and the first exit pupil. This can create a larger combined exit pupil 210 when the first optical component 104A is in an off state.

The use of one or more switchable optical components 104 can therefor provide an adjustable spacing between the light guide 102 and the optical components 104 without having to have any moveable components within the apparatus 100.

In the example of Fig. 7 two optical components 104 are provided stacked over each other. In other examples more than two optical components could be provided in the stack. This can enable more than two different spacings to be provided between the light guide 102 and the active optical component 104.

In the examples described above the optical components 104 comprise mirrors. The mirrors can be planar and parallel with the light guide 102 or could be curved to compensate for curvature of a windshield 208.

Other types of optical component 104 could be used in other examples. In some examples the optical components 104 could comprise dichroic mirrors. The dichroic mirrors can reflect wavelengths selectively. For instance, the second expanded beam of light 110 can comprise multiple wavelength bands and the dichroic mirrors can be configured to reflect light in a subset of the wavelength bands. This could be used to reflect blue light for example and compensate for the distribution of blue light in the first exit pupil which can be sparse or have low intensity compared to the distribution of red and green light. This can improve the resulting visual experience by providing an exit pupil with more even distribution for different wavelengths of light. Providing selective compensation for some wavelengths of light can enable thicker light guides 102 to be used. This can increase the in-coupling efficiency for the light guide 102 and result in a brighter exit pupil.

In examples where the apparatus 100 comprises multiple optical components 104 arranged in a stacked configuration the respective optical components 104 could comprise mirrors, one or more lenses, one or more dichroic beam splitters, or one or more polarizing beam splitters, semi-reflective surfaces or any other suitable optical components. For instance, a first mirror could be provided with a first spacing from the light guide 102 and a second mirror could be provided with a second spacing from the light guide 102. The first mirror could be arranged to reflect a light in first subset of wavelengths and the second mirror could be arranged to reflect a light in second subset of wavelengths. The first subset could comprise red and green light and the second subset could comprise blue light. Other arrangements could be used in other examples.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to 'comprising only one...' or by using 'consisting.'

In this description, the wording 'connect', 'couple' and 'communication' and their derivatives mean operationally connected/coupled/in communication. It should be appreciated that any number or combination of intervening components can exist (including no intervening components), i.e., to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database, or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can', or 'may' refers to a particular instance in a class of examples. A property of the instance can be a property of only that instance or a property of the class or a property of a sub-class of the class that includes some but not all the instances in the class. It is therefore implicitly disclosed that a feature described with reference to one example but not with reference to another example, can where possible be used in that other example as part of a working combination but does not necessarily have to be used in that other example.

As used herein, "at least one of the following: " and "at least one of " and similar wording, where the list of two or more elements are joined by "and" or "or" mean at least any one of the elements, or at least any two or more of the elements, or at least all the elements.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

The description of a feature, such as an apparatus or a component of an apparatus, configured to perform a function, or for performing a function, should additionally be considered to also disclose a method of performing that function. For example, description of an apparatus configured to perform one or more actions, or for performing one or more actions, should additionally be considered to disclose a method of performing those one or more actions with or without the apparatus.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of `at least one' or 'one or more' may be used to emphasis an inclusive meaning but the absence of these terms should not be taken to infer any exclusive meaning.

The presence of a feature (or combination of features) in a claim is a reference to that feature or (combination of features) itself and to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

**In** this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance the Applicant may seek protection via the claims in respect of any patentable feature or combination of features hereinbefore referred to and/or shown in the drawings whether or not emphasis has been placed thereon.

## Claims

1. An apparatus comprising:
a light guide configured to receive an input beam of light and provide a first expanded output beam of light and a second expanded output beam of light wherein the first expanded beam of light is directed in a first direction and the second expanded beam of light is directed in a second direction; and
at least one optical component, spaced from the light guide, and configured to reflect at least part of the second expanded output beam of light towards the first direction to provide a combined exit pupil comprising the first expanded beam of light and the second expanded beam of light wherein the combined exit pupil comprises a non-overlapping region.

2. An apparatus as claimed in claim 1 wherein the at least one optical component is adjustable to enable a spacing between the light guide and the at least one optical component to be adjusted and thereby adjust the size of the combined exit pupil.

3. An apparatus as claimed in claim 2 wherein the at least one optical component that is adjustable comprise one or more optical components that are moveable relative to the light guide.

4. An apparatus as claimed in any preceding claim wherein the apparatus comprises a first optical component and a second optical component and the first optical component is positioned between the light guide and the second optical component.

5. An apparatus as claimed in claim 4 wherein at least the first optical component is switchable.

6. An apparatus as claimed in any preceding claim wherein the second expanded output beam of light comprises a first wavelength band and a second wavelength band and the at least one optical component is configured to reflect light in the first wavelength band.

7. An apparatus as claimed in any preceding claim wherein the second expanded output beam of light comprises a first polarization state and a second polarization state and the at least one optical component is configured to reflect light in the first polarization state.

8. An apparatus as claimed in any preceding claim wherein the at least one optical component is positioned so that the combined exit pupil comprises a non-overlapping region in a first dimension and a second dimension.

9. An apparatus as claimed in any preceding claim wherein the at least one optical component is parallel with the light guide.

10. An apparatus as claimed in any preceding claim wherein the at least one optical component comprises at least one of:
one or more mirrors;
one or more lenses;
one or more dichroic beam splitters; or
one or more polarizing beam splitters.

11. An apparatus as claimed in any preceding claim wherein the first expanded output beam of light and the reflected second expanded output beam of light are arranged to be directed towards a windshield and reflected from the windshield towards a user.

12. An apparatus as claimed in claim 11 comprising one or more optical components configured to compensate for the curvature of the windscreen.

13. An apparatus as claimed in any preceding claim wherein the light guide comprises in-coupling diffractive means configured to in-couple one or more input beams of light into the light guide, expanding diffractive means configured to expand the one or more input beams of light, and out-coupling diffractive means configured to out-couple the one or more beams of light from the light guide to provide the first expanded output beam of light and the second expanded output beam of light.

14. A device comprising an apparatus as claimed in any preceding claim wherein the device comprises at least one of:
a terrestrial vehicle;
an aquatic vehicle; or
an aerial vehicle.
